# FASCICULE DE BREVET EUROPEEN

(11) **EP 2 331 388 B1**
(45) Date de publication et mention de la délivrance du brevet: **30.07.2014**
(21) Numéro de dépôt: 09755951.2
(22) Date de dépôt: 01.10.2009
(51) Int. Cl.: B62D 25/08, B62D 65/04, B60K 11/04, B62D 65/02, B62D 65/16

(54) **AGENCEMENT POUR LE MONTAGE D'UNE FACE AVANT TECHNIQUE DE VEHICULE**
ANORDNUNG FÜR DIE MONTAGE DES FRONTENDMODULS EINES FAHRZEUGS
ARRANGEMENT FOR ASSEMBLING A VEHICLE FRONT END MODULE

(30) Priorité: 03.10.2008 FR 0856719
(43) Date de publication de la demande: 15.06.2011
(73) Titulaire: Renault S.A.S., 92100 Boulogne-Billancourt (FR)
(72) Inventeur: COMBE, François, F-78250 Meulan (FR); FLANDIN, Michael, F-28410 Broue (FR); PIETU, Nicolas, F-78280 Guyancourt (FR)
(86) Numéro de dépôt international: PCT/FR2009/051875
(87) Numéro de publication internationale: WO 2010/037981

(56) Documents cités:
- EP-A- 1 247 908
- EP-A- 1 336 554
- WO-A2-2008/139071
- FR-A- 2 899 558
- JP-A- 2005 271 795

## Description

L'invention concerne un agencement pour le montage, sur une ligne d'assemblage d'un véhicule automobile, d'un élément mécanique sensiblement vertical dit "face avant technique".

L'invention concerne plus particulièrement un agencement pour le montage, sur une ligne d'assemblage d'un véhicule automobile, d'un élément mécanique sensiblement vertical, dit "face avant technique", comportant notamment au moins un radiateur de refroidissement, sur un élément transversal de structure d'une caisse du véhicule tel qu'une traverse supérieure, l'élément mécanique comportant au moins une partie sensiblement horizontale, dite "buse structurelle", destinée à reposer sur une face supérieure de la traverse supérieure, ledit agencement comportant au moins une platine porteuse de l'élément mécanique, qui est destiné à être glissée sous la caisse du véhicule, puis montée verticalement pour permettre l'assemblage notamment de l'élément mécanique à l'élément transversal de structure de la caisse du véhicule.

On connaît de nombreux exemples d'agencements pour le montage, sur une caisse de véhicule automobile, d'un élément mécanique sensiblement vertical dit "face avant technique".

Conventionnellement, l'élément mécanique sensiblement vertical dit "face avant technique", reposant sur une platine aussi appelée "lugette", est amené sous le véhicule. Selon les cas, la caisse du véhicule est descendue sur la platine, ou la platine est montée sous le véhicule, et la face avant technique est alors fixée à la caisse du véhicule. Ceci est rendu possible par la réalisation particulière de l'élément mécanique ou face avant technique qui est conventionnellement fixée sensiblement suivant l'axe du véhicule, de sorte qu'elle n'interfère pas avec le véhicule lors de la montée relative de la lugette sous le véhicule.

Cet agencement ne peut malheureusement pas être appliqué à toutes les formes de faces avant techniques.

En particulier, certaines faces avant techniques comportent au moins une partie sensiblement horizontale, dite "buse structurelle", destinée à reposer sur une face supérieure d'une traverse supérieure de la caisse du véhicule.

On comprend alors bien que la face avant technique ne peut être mise en position de montage par un déplacement vertical. En effet la partie horizontale de la face avant technique, qui est levée sous la traverse lors de la montée relative de la lugette sous le véhicule, risquerait d'entrer en collision avec une face inférieure de la traverse. Le document FR 2 899 558 et celui publié tardivement WO 2008/139071 A2 décrivent un basculement de la face avant technique vers l'avant puis un retour dans la position verticale. En revanche ces solutions connuent ne traitent pas des difficultés de raccordement de la face avant technique au groupe motopropulseur du véhicule.

L'invention remédie à cet inconvénient en proposant un MS agencement permettant le montage de la face avant technique sur la caisse du véhicule automobile avec un mouvement particulier à l'issue d'un mouvement conventionnel de montée relative de la lugette sous le véhicule.

Dans ce but, l'invention propose un agencement du type décrit précédemment, tel que la platine comporte un moyen de réception de l'élément mécanique vertical, dit "fourchette", qui est susceptible de maintenir ledit élément entre au moins :
- une position verticale inclinée vers l'avant, pour permettre la montée de l'élément mécanique vertical avec la platine sans que sa partie sensiblement horizontale, dite "buse structurelle", n'interfère avec la traverse supérieure,
- une position verticale pour permettre la fixation de la partie sensiblement horizontale, dite "buse structurelle", sur la traverse et le redressement de l'élément mécanique vertical.

Le moyen de réception de l'élément mécanique vertical, dit "fourchette", est de surcroît susceptible de maintenir ledit élément entre au moins :
- la position verticale inclinée vers l'avant, pour permettre la montée de l'élément mécanique vertical avec la platine sans que sa partie sensiblement horizontale, dite "buse structurelle", n'interfère avec la traverse supérieure,
- une position verticale inclinée vers l'arrière, pour permettre le raccordement d'au moins un élément de liaison, notamment un tuyau, d'un groupe motopropulseur du véhicule avec l'élément mécanique vertical, NNB
en passant par la position verticale permettant la fixation de la partie sensiblement horizontale, dite "buse structurelle", sur la traverse et le redressement de l'élément mécanique vertical.

Selon d'autres caractéristiques de l'invention:
- la fourchette présente la forme d'un profilé comportant une paroi de fond à partir de laquelle s'étendent une surface inclinée vers l'arrière de la platine et une surface inclinée vers l'avant, associées respectivement aux positions verticales inclinées vers l'arrière et vers l'avant de l'élément mécanique vertical,
- un loquet de verrouillage est interposé entre la fourchette et l'élément mécanique vertical pour verrouiller ledit élément mécanique vertical dans sa position verticale inclinée vers l'avant pendant la montée de la platine sous la caisse du véhicule automobile,
- l'élément mécanique vertical comporte au moins un moyen de mise en position dudit élément par rapport au véhicule, notamment un doigt sensiblement vertical dont une extrémité sphérique est destinée à traverser sans la toucher une lumière d'une traverse inférieure en cours de fixation du véhicule.

D'autres caractéristiques et avantages de l'invention apparaîtront à la lecture de la description détaillée qui suit pour la compréhension de laquelle on se reportera aux dessins annexés dans lesquels :
- la figure 1 représente l'agencement selon l'invention occupant sa position inclinée vers l'avant, la lugette étant agencée sous la caisse du véhicule,
- la figure 2 représente l'agencement selon l'invention occupant sa position inclinée vers l'avant, la lugette étant remontée sous la caisse du véhicule,
- la figure 3 représente l'agencement selon l'invention occupant sa position inclinée vers l'arrière, la lugette étant remontée sous la caisse du véhicule,
- la figure 4 représente l'agencement selon l'invention occupant sa position finale verticale.

Dans la description qui va suivre, des chiffres de référence identiques désignent des pièces identiques ou ayant des fonctions similaires.

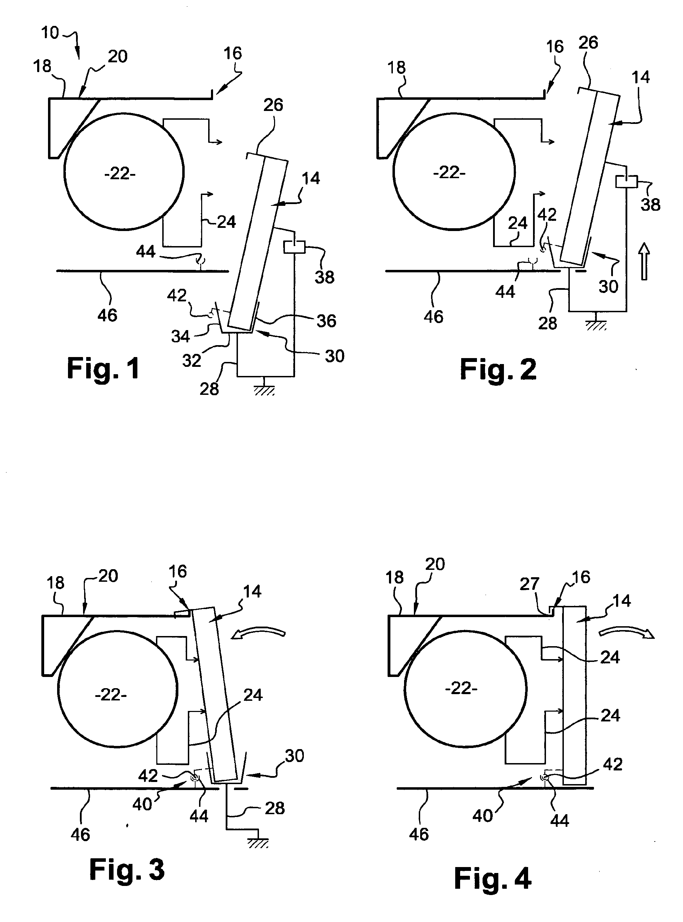

On a représenté à la figure 1 un agencement 10 pour le montage, sur une ligne d'assemblage d'un véhicule 20 automobile, d'un élément mécanique 14 sensiblement vertical, dit "face avant technique", sur un élément 16 transversal de structure d'une caisse 18 du véhicule 20.

La caisse 18 du véhicule 20 reçoit par exemple un groupe motopropulseur 22 et l'élément mécanique 14 dit, "face avant technique", comporte par exemple au moins un radiateur de refroidissement (non représenté) qui est destiné, comme l'illustre la figure 4, à être relié au groupe motopropulseur 22 par l'intermédiaire d'au moins un élément de liaison 24 tel qu'un tuyau ou un câble.

L'élément 16 transversal de structure d'une caisse 18 du véhicule 20 est par exemple une traverse supérieure 16 de la caisse 18 du véhicule 20.

De manière connue, l'élément mécanique 14 comporte au moins une partie 26 sensiblement horizontale, dite "buse structurelle", qui est destinée à reposer et à être fixée sur une face supérieure 27 de la traverse 16, comme représenté à la figure 4.

Comme l'illustre la figure 1, l'agencement 10 comporte au moins une platine porteuse 28 de l'élément mécanique 14, qui est destiné à être glissée sous la caisse 18 du véhicule 20, puis montée verticalement comme l'illustrent les figures 2 et suivantes, pour permettre l'assemblage notamment de l'élément mécanique 14 à l'élément 16 transversal de structure de la caisse 18 du véhicule 20.

Conformément à l'invention, la platine 28 comporte un moyen 30 de réception de l'élément 14 mécanique vertical, dit "fourchette", qui est susceptible de maintenir ledit élément 14 entre au moins :
- une position verticale inclinée vers l'avant, représentée à la figure 1, pour permettre la montée de l'élément 14 mécanique vertical avec la platine 28 sans que sa partie 26 sensiblement horizontale, dite "buse structurelle", n'interfère avec la traverse 16 supérieure,
- une position verticale, représentée à la figure 4 pour permettre la fixation de la partie 26 sensiblement horizontale, dite "buse structurelle", sur la face supérieure 27 de la traverse 16 et le redressement 14 de l'élément mécanique vertical.

De préférence, comme l'illustre la figure 3, le moyen 30 de réception de l'élément 14 mécanique vertical, dit "fourchette", est de surcroît susceptible de maintenir ledit élément 14 entre au moins :
- la position verticale inclinée vers l'avant, représentée à la figure 1,
- une position verticale inclinée vers l'arrière, représentée à la figure 3, qui permet le raccordement d'au moins un élément 24 de liaison, notamment un tuyau, du groupe motopropulseur 22 du véhicule avec l'élément 14 mécanique vertical,
en passant par la position verticale de la figure 4 permettant la fixation de la partie 26 sensiblement horizontale, dite "buse structurelle", sur la face supérieure 27 de la traverse 16 et le redressement de l'élément 14 mécanique vertical.

Chronologiquement, au cours du processus de montage, l'élément 14 occupe donc d'abord la position verticale inclinée vers l'avant, comme représenté aux figures 1 et 2. Puis, comme l'illustre la figure 3, l'élément 14 vertical est basculé vers l'arrière afin de permettre le raccordement de l'élément 24 de liaison. Enfin, comme l'illustre la figure 4, l'élément 14 est redressé dans sa position verticale.

Dans le mode de réalisation préféré de l'invention, le moyen 30 de réception de l'élément 14 mécanique vertical, dit "fourchette", présente la forme d'un profilé comportant une paroi de fond 32 à partir de laquelle s'étendent une surface 34 inclinée vers l'arrière de la platine et une surface 36 inclinée vers l'avant, associées respectivement aux positions verticales inclinées vers l'arrière et vers l'avant de l'élément 14 mécanique vertical.

De préférence, un loquet 38 de verrouillage est interposé entre la fourchette 30 et l'élément 14 mécanique vertical pour verrouiller ledit élément mécanique 14 vertical dans sa position verticale inclinée vers l'avant, ceci afin de permettre la montée de la platine sous la caisse du véhicule automobile sans que l'élément 14 ne risque d'entrer en collision avec la traverse 16. Le loquet est déverrouillé une fois la montée de la platine 28 effectuée, c'est-à-dire préalablement à l'opération de branchement de l'élément 24 de liaison qui a été représentée à la figure 3.

Tout moyen technique peut convenir à la bonne réalisation de ce loquet 38, qui doit donc être déverrouillé par un opérateur avant l'opération de branchement de l'élément 24 de liaison qui a été représentée à la figure 3.

Enfin, on remarquera que, de préférence, l'élément 14 mécanique vertical comporte au moins un moyen 40 de mise en position dudit élément 14 par rapport au véhicule 20, afin de garantir la géométrie de mise en position de l'élément 14.

Ce moyen 40 de mise en position consiste par exemple en un doigt 40 sensiblement vertical dont une extrémité sphérique 42 est destinée à traverser sans la toucher une lumière 44 d'une traverse inférieure 46 en cours de fixation du véhicule.

L'invention permet donc avantageusement de faciliter le montage d'une face avant technique 14 sous la caisse 18 d'un véhicule 20.

## Revendications

1. Agencement (10) pour le montage, sur une ligne d'assemblage d'un véhicule automobile (20), d'un élément mécanique (14) sensiblement vertical, dit "face avant technique" comportant au moins un radiateur de refroidissement apte à être relié avec un groupe motopropulseur (22) du véhicule, sur une traverse (16) transversale supérieure de structure d'une caisse (18) du véhicule (20), ledit agencement comportant la traverse (16) supérieure, ledit élément mécanique (14) comportant au moins une partie (26) sensiblement horizontale destinée à reposer sur une face (27) supérieure de la traverse (16) supérieure, et au moins une platine porteuse (28) de l'élément mécanique (14), ladite platine étant destinée à être glissée sous la caisse du véhicule (20), puis montée verticalement pour permettre l'assemblage notamment de l'élément mécanique (14) à la traverse (16) supérieure du véhicule (20), ladite platine (28) comportant un moyen (30) de réception de l'élément (14) mécanique vertical, dit "fourchette", qui est susceptible de maintenir ledit élément (14) entre au moins une position verticale inclinée vers l'avant, pour permettre la montée de l'élément (14) mécanique vertical avec la platine (28) sans que sa partie (26) sensiblement horizontale, n'interfère avec la traverse (16) supérieure, et une position verticale pour permettre la fixation de la partie (26) sensiblement horizontale, sur la traverse (16) et le redressement de l'élément (14) mécanique vertical,
**caractérisé en ce que** le moyen (30) de réception de l'élément mécanique vertical, dit "fourchette", est de surcroît susceptible de maintenir ledit élément (14) entre au moins :
- la position verticale inclinée vers l'avant, pour permettre la montée de l'élément (14) mécanique vertical avec la platine (28) sans que sa partie (26) sensiblement horizontale n'interfère avec la traverse (16) supérieure,
- une position verticale inclinée vers l'arrière, pour permettre le raccordement d'au moins un élément (24) de liaison, notamment un tuyau, du groupe motopropulseur (22) du véhicule avec l'élément (14) mécanique vertical,
en passant par la position verticale permettant la fixation de la partie (26) sensiblement horizontale sur la traverse (16) et le redressement de l'élément mécanique (14) vertical.

2. Agencement (10) selon la revendication précédente, **caractérisé en ce que** la fourchette (30) présente la forme d'un profilé comportant une paroi de fond (32) à partir de laquelle s'étendent une surface (34) inclinée vers l'arrière de la platine et une surface (36) inclinée vers l'avant, associées respectivement aux positions verticales inclinées vers l'arrière et vers l'avant de l'élément (14) mécanique vertical.

3. Agencement (10) selon la revendication précédente, **caractérisé en ce qu'**un loquet (38) de verrouillage est interposé entre la fourchette (30) et l'élément (14) mécanique vertical pour verrouiller ledit élément (14) mécanique vertical dans sa position verticale inclinée vers l'avant pendant la montée de la platine (28) sous la caisse (18) du véhicule (20) automobile.

4. Agencement (10) selon l'une quelconque des revendications précédentes, **caractérisé en ce que** l'élément (14) mécanique vertical comporte au moins un moyen (40) de mise en position dudit élément par rapport au véhicule, notamment un doigt (40) sensiblement vertical dont une extrémité (42) sphérique est destinée à traverser sans la toucher une lumière (44) d'une traverse (46) inférieure en cours de fixation du véhicule.

## Patentansprüche

1. Anordnung (10) für die Montage auf einer Montagelinie eines Kraftfahrzeugs (20), eines mechanischen Elements (14), das im Wesentlichen vertikal ist, "Frontendmodul" genannt, das wenigstens einen Kühler aufweist, der geeignet ist, um mit einem Antriebsaggregat (22) des Fahrzeugs verbunden zu sein, auf einem oberen Strukturquerträger (16) einer Karosserie (18) des Fahrzeugs (20), wobei die Anordnung den oberen Querträger (16) aufweist, wobei das mechanische Element (14) mindestens ein Teil (26), das im Wesentlichen horizontal ist, aufweist, das dazu bestimmt ist, auf einer Oberseite (27) des oberen Querträgers (16) zu ruhen, und mindestens eine Tragplatte (28) des mechanischen Elements (14), wobei die Platte dazu bestimmt ist, unter die Karosserie des Fahrzeugs (20) geschoben zu werden, dann vertikal gehoben zu werden, um das Zusammenbauen insbesondere des mechanischen Elements (14) mit dem oberen Querträger (16) des Fahrzeugs (20) zu erlauben, wobei die Platte (28) ein Aufnahmemittel (30) des mechanischen vertikalen Elements (14), "Gabel" genannt, aufweist, das das Element (14) zwischen mindestens einer vertikalen, nach vorn geneigten Position halten kann, um das Aufsteigen des mechanischen vertikalen Elements (14) mit der Platte (28) zu erlauben, ohne dass sein im Wesentlichen horizontales Teil (26) den oberen Querträger (16) beeinträchtigt, und eine vertikaler Position, um das Befestigen des im Wesentlichen horizontalen Teils (26) auf dem Querträger (16) und das Aufrichten des mechanischen vertikalen Elements (14) zu erlauben,
**dadurch gekennzeichnet, dass** das Aufnahmemittel (30) des mechanischen vertikalen Elements, "Gabel" genannt, außerdem das Element (14) zwischen wenigstens Folgendem halten kann:
- der vertikalen nach vorn geneigten Position, um den Aufstieg des mechanischen vertikalen Elements (14) mit der Platte (28) zu erlauben, ohne dass sein im Wesentlichen horizontales Teil (26) den oberen Querträger (16) beeinträchtigt,
- eine vertikale nach hinten geneigte Position, um das Verbinden mindestens eines Verbindungselements (24), insbesondere eines Schlauchs, des Antriebsaggregats (22) des Fahrzeugs mit dem mechanischen vertikalen Element (14) zu erlauben,
indem die vertikale Position, die das Befestigen des im Wesentlichen horizontal Teils (26) auf dem Querträger (16) und das Wiederaufrichten des mechanischen vertikalen Elements (14) erlaubt, durchlaufen wird.

2. Anordnung (10) nach dem vorhergehenden Anspruch, **dadurch gekennzeichnet, dass** die Gabel (30) die Form eines Profils aufweist, das eine Bodenwand (32) aufweist, von der ausgehend sich eine Oberfläche (34), die zu der Rückseite der Platte hin geneigt ist, und eine Oberfläche (36), die nach vorn geneigt ist, erstrecken, die jeweils mit der vertikalen nach hinten und nach vorn geneigten Position des mechanischen vertikalen Elements (14) verbunden sind.

3. Anordnung (10) nach dem vorhergehenden Anspruch, **dadurch gekennzeichnet, dass** eine Verriegelungsklinke (38) zwischen die Gabel (30) und das mechanische vertikale Element (14) eingefügt ist, um das mechanische vertikale Element (14) in seiner vertikalen nach vorn geneigten Position während des Aufsteigens der Platte (28) unter der Karosserie (18) des Kraftfahrzeugs (20) zu verriegeln.

4. Anordnung (10) nach einem der vorhergehenden Ansprüche, **dadurch gekennzeichnet, dass** das mechanische vertikale Element (14) mindestens ein Mittel (40) zum Positionieren des Elements in Bezug auf das Fahrzeug aufweist, insbesondere einen im Wesentlichen vertikalen Finger (40), von dem ein kugelförmiges Ende (42) dazu bestimmt ist, ein Langloch (44) eines unteren Querträgers (46) im Laufe des Befestigens des Fahrzeugs zu durchqueren, ohne es zu berühren.

## Claims

1. Arrangement (10) for mounting, on a motor vehicle (20) assembly line, a substantially vertical mechanical element (14) known as the "front technical surface", comprising at least one cooling radiator which can be connected to a propulsion unit (22) of the vehicle, onto a transverse structural upper crossmember (16) of a body (18) of the vehicle (20), said arrangement comprising the upper crossmember (16), said mechanical element (14) comprising at least one substantially horizontal part (26) intended to rest on an upper face (27) of the upper crossmember (16), and at least one bearing platform (28), bearing the mechanical element (14), said platform being intended to be slid under the body of the vehicle (20) then raised up vertically so as notably to allow the mechanical element (14) to be assembled with the upper crossmember (16) of the vehicle (20), said platform (28) comprising a means (30), known as a "yoke", for accepting the vertical mechanical element (14), which yoke is capable of holding said element (14) between at least a vertical position that is tilted forward, so as to allow the vertical mechanical element (14) to be raised up with the platform (28) without its substantially horizontal part (26) interfering with the upper crossmember (16), and a vertical position to allow the substantially horizontal part (26) known to be attached to the crossmember (16) and the vertical mechanical element (14) to be stood up straight,
**characterized in that** the means (30), known as a "yoke", for accepting the vertical mechanical element is additionally capable of holding said element (14) between at least:
- the tilted forward vertical position to allow the vertical mechanical element (14) to be raised up with the platform (28) without its substantially horizontal part (26) interfering with the upper crossmember (16),
- a tilted backward vertical position to allow at least one connecting element (24), notably a pipe, of the propulsion unit (22) of the vehicle to be connected to the vertical mechanical element (14),
passing via the vertical position that allows the substantially horizontal part (26) to be attached to the crossmember (16) and the vertical mechanical element (14) to be stood up straight.

2. Arrangement (10) according to the preceding claim, **characterized in that** the yoke (30) is in the form of a profile section comprising a bottom wall (32) from which there extend a surface (34) that is inclined toward the rear of the platform and a surface (36) that is inclined toward the front, these surfaces being respectively associated with the tilted back and tilted forward vertical positions of the vertical mechanical element (14).

3. Arrangement (10) according to the preceding claim, **characterized in that** a locking catch (38) is interposed between the yoke (30) and the vertical mechanical element (14) so as to lock said vertical mechanical element (14) in its tilted forward vertical position while the platform (28) is being raised up under the body (18) of the motor vehicle (20).

4. Arrangement (10) according to any one of the preceding claims, **characterized in that** the vertical mechanical element (14) comprises at least one means (40) for positioning said element with respect to the vehicle, notably a substantially vertical finger (40), a spherical end (42) of which is intended to pass, without touching it, through an aperture (44) in a lower crossmember (46) during attachment of the vehicle.
